# EUROPEAN PATENT APPLICATION

(11) **EP 4 742 487 A1**
(43) Date of publication of application: **13.05.2026**
(21) Application number: 24864022.9
(22) Date of filing: 18.03.2024
(51) Int. Cl.: H02J 3/38, H04L 67/12

(54) **POWER CONVERSION DEVICE, AND WAVEFORM RECORDING METHOD AND SYSTEM FOR POWER CONVERSION DEVICE**

(30) Priority: 15.09.2023 CN 202311196327
(71) Applicant: Sungrow Power Supply Co., Ltd., Hefei, Anhui 230088 (CN)
(72) Inventor: XI, Zhigui, Hefei, Anhui 230088 (CN); LI, Haitao, Hefei, Anhui 230088 (CN); ZHANG, Zhongyang, Hefei, Anhui 230088 (CN)
(74) Representative: Rooney, John-Paul
(86) International application number: PCT/CN2024/082142
(87) International publication number: WO 2025/055295

(57) **Abstract**

Provided in the present application are a power conversion device, and a waveform recording method and system for a power conversion device. The method comprises: when a power conversion device is in a grid-connected stage, a communication unit of the power conversion device forwarding to a data processing unit a received data acquisition message sent by an external adjustment device; according to the data acquisition mode indicated by the data acquisition message, the data processing unit acquiring grid-connected operation data of a power conversion unit in the grid-connected stage; on the basis of the acquired grid-connected operation data, generating a feedback message, and sending the feedback message to the communication unit; and the communication unit sending the feedback message to the external adjustment device, such that the external adjustment device monitors the grid-connected state of the power conversion device on the basis of the feedback message. The method involves acquiring the grid-connected operation data of the power conversion unit in a grid-connected working state, thus related technicians can adjust the power conversion unit and analyze the operation conditions thereof on the basis of the data, thereby improving the development and adjustment efficiency of power conversion units.

## Description

The present disclosure claims the priority to Chinese Patent Application No. 202311196327.6, titled "POWER CONVERSION DEVICE, AND WAVEFORM RECORDING METHOD AND SYSTEM FOR POWER CONVERSION DEVICE", filed on September 15, 2023 with the China National Intellectual Property Administration, which is incorporated herein by reference in its entirety.

### FIELD

The present disclosure relates to the technical field of renewable energy power generation, and in particular to a power conversion apparatus, and a waveform recording method and a waveform recording system for a power conversion apparatus.

### BACKGROUND

In the related art, during a development and adjustment process of an inverter, a simulator is connected to a data processing unit provided in the inverter, to view grid-connection operation data such as a current and a voltage of the inverter collected by the data processing unit through the simulator. However, in the above-mentioned method, technical personnel can only view a value of current grid-connection operation data, but cannot know a change situation of the grid-connection operation data. Specifically, technical personnel cannot know a value and a corresponding change situation of the data during a grid-connected operation process. In addition, when the inverter operates in grid connection, since a current passing through the inverter is large, the simulator and the data processing unit need to be disconnected for safety reasons. In this case, technical personnel cannot know an operation condition of the inverter, making it difficult to adjust the inverter.

### SUMMARY

In view of this, the purpose of the present disclosure is to provide a power conversion apparatus, and a waveform recording method and a waveform recording system for a power conversion apparatus, to acquire grid-connection operation data of a power conversion unit in a grid-connected working state, such as a grid-connected adjustment working state, during a development and adjustment process of the power conversion unit. Technical personnel may further adjust the power conversion unit and analyze an operation condition based on the data, and development and adjustment efficiency of the power conversion unit is improved.

In a first aspect, a power conversion apparatus is provided according to an embodiment of the present disclosure. The power conversion apparatus includes a power conversion unit, a data processing unit and a communication unit. The communication unit is configured to forward, in response to receiving a data acquisition message sent from an external commissioning apparatus, the data acquisition message to the data processing unit when the power conversion apparatus is in a grid-connected stage, such as a grid-connected adjustment stage. The data processing unit is configured to acquire, in response to receiving the data acquisition message forwarded from the communication unit, grid-connection operation data of the power conversion unit during a grid-connected process, such as the grid-connected adjustment stage, based on a data acquisition mode indicated by the data acquisition message, and the data processing unit is configured to generate a feedback message based on the acquired grid-connection operation data, and send the feedback message to the communication unit. The communication unit is further configured to send, in response to receiving the feedback message sent from the data processing unit, the feedback message to the external commissioning apparatus, to enable the external commissioning apparatus to monitor a grid-connected state of the power conversion apparatus based on the feedback message.

In an embodiment, the data processing unit is further configured to parse the data acquisition message to determine a data acquisition parameter, where the data acquisition parameter is used to indicate the data acquisition mode, and the data processing unit is further configured to acquire the grid-connection operation data of the power conversion unit during the grid-connected process based on the data acquisition mode indicated by the data acquisition parameter.

In an embodiment, the data acquisition parameter includes a waveform recording variable address, where the waveform recording variable address indicates a storage address of a grid-connected operation parameter to be acquired. The data processing unit is further configured to read a specified number of grid-connection operation data from the storage address indicated by the waveform recording variable address.

In an embodiment, the data acquisition parameter includes a trigger source address, a trigger value parameter and the waveform recording variable address, where the trigger source address indicates a storage address of a trigger parameter. The data processing unit is further configured to read the trigger parameter from the storage address indicated by the trigger source address before performing the reading a specified number of grid-connection operation data from the storage address indicated by the waveform recording variable address, the data processing unit is further configured to determine whether a trigger condition is satisfied based on the trigger parameter and the trigger value parameter, and the data processing unit is further configured to perform, in response to the trigger condition being satisfied, the reading a specified number of grid-connection operation data from the storage address indicated by the waveform recording variable address.

In an embodiment, the trigger condition includes: the trigger parameter being greater than or equal to the trigger value parameter, or the trigger parameter being less than the trigger value parameter.

In an embodiment, the trigger parameter includes a first trigger parameter and a second trigger parameter, and the trigger value parameter includes a first trigger value parameter corresponding to the first trigger parameter and a second trigger value parameter corresponding to the second trigger parameter. The data processing unit is further configured to determine whether a numerical comparison relationship between the first trigger parameter and the first trigger value parameter satisfies a first trigger condition to obtain a first determination result, the data processing unit is further configured to determine whether a numerical comparison relationship between the second trigger parameter and the second trigger value parameter satisfies a second trigger condition to obtain a second determination result, and the data processing unit is further configured to determine, based on the first determination result and the second determination result, whether to perform the reading a specified number of grid-connection operation data from the storage address indicated by the waveform recording variable address.

In an embodiment, the first trigger condition includes: the first trigger parameter being greater than or equal to the first trigger value parameter, or the first trigger parameter being less than the first trigger value parameter. The second trigger condition includes: the second trigger parameter being greater than or equal to the second trigger value parameter, or the second trigger parameter being less than the second trigger value parameter.

In an embodiment, the data processing unit is further configured to perform, in response to the first determination result of the first trigger condition being satisfied and the second determination result of the second trigger condition being satisfied, the reading a specified number of grid-connection operation data from the storage address indicated by the waveform recording variable address, or the data processing unit is further configured to perform, in response to the first determination result of the first trigger condition being satisfied or the second determination result of the second trigger condition being satisfied, the reading a specified number of grid-connection operation data from the storage address indicated by the waveform recording variable address.

In an embodiment, the data acquisition parameter further includes a trigger type parameter, where the trigger type parameter is used to indicate a numerical change mode of the trigger parameter reaching the trigger value parameter. The data processing unit is further configured to determine whether the trigger parameter reaches the trigger value parameter in a numerical change mode corresponding to the trigger type parameter.

In an embodiment, the numerical change mode includes changing from small to large, or changing from large to small, or both changing from small to large and changing from large to small. The trigger type parameter corresponding to the numerical change mode of changing from small to large is rising edge triggering; the trigger type parameter corresponding to the numerical change mode of changing from large to small is falling edge triggering; and the trigger type parameter corresponding to the numerical change mode of changing from small to large and changing from large to small is rising edge triggering and falling edge triggering.

In an embodiment, the data acquisition parameter includes a waveform recording variable data type. The data processing unit is further configured to perform package on the acquired grid-connection operation data based on a package mode corresponding to the waveform recording variable data type to generate the feedback message.

In a second aspect, a waveform recording method for a power conversion apparatus is provided according to an embodiment of the present disclosure. The method is applied to a data processing unit of the power conversion apparatus, where the power conversion apparatus further includes a power conversion unit and a communication unit. The method includes: receiving a data acquisition message forwarded from the communication unit, where the data acquisition message is sent to the communication unit by an external commissioning apparatus when the power conversion apparatus is in a grid-connected stage; acquiring grid-connection operation data of the power conversion unit during a grid-connected process based on a data acquisition mode indicated by the data acquisition message; and generating a feedback message based on the acquired grid-connection operation data, and sending the feedback message to the communication unit, to enable the communication unit to send the feedback message to the external commissioning apparatus, where a grid-connected state of the power conversion apparatus is monitored by the external commissioning apparatus based on the feedback message.

In an embodiment, the acquiring grid-connection operation data of the power conversion unit during a grid-connected process based on a data acquisition mode indicated by the data acquisition message includes: parsing a first message to determine a data collection parameter, and acquiring the grid-connection operation data of the power conversion unit during the grid-connected process based on the data collection parameter.

In an embodiment, the data collection parameter includes a waveform recording variable address, where the waveform recording variable address is used for storing the grid-connection operation data collected by the data processing unit. The acquiring the grid-connection operation data of the power conversion unit during the grid-connected process based on the data collection parameter includes: acquiring a specified number of the grid-connection operation data from the waveform recording variable address.

In an embodiment, the data collection parameter includes a trigger source address, a trigger value parameter and the waveform recording variable address, where the trigger source address is used for storing a first operation parameter collected by the data processing unit, and the waveform recording variable address is used for storing the grid-connection operation data collected by the data processing unit. The acquiring the grid-connection operation data of the power conversion unit during the grid-connected process based on the data collection parameter includes: acquiring the first operation parameter from the trigger source address; determining whether the first operation parameter is equal to the trigger value parameter; acquiring, in response to the first operation parameter being equal to the trigger value parameter, a specified number of the grid-connection operation data from the waveform recording variable address.

In an embodiment, the data collection parameter further includes a trigger type parameter, where the trigger type parameter is used to indicate a numerical change mode of the first operation parameter reaching the trigger value parameter. The determining whether the first operation parameter is equal to the trigger value parameter includes: determining whether the first operation parameter reaches the trigger value parameter in a numerical change mode corresponding to the trigger type parameter.

In an embodiment, the acquiring a specified number of the grid-connection operation data from the waveform recording variable address includes: acquiring the specified number of grid-connection operation data stored in the waveform recording variable address starting from a current moment.

In an embodiment, the acquiring a specified number of the grid-connection operation data from the waveform recording variable address includes: acquiring 1/2 of the specified number of grid-connection operation data stored in the waveform recording variable address before the current moment, and 1/2 of the specified number of grid-connection operation data stored in the waveform recording variable address starting from the current moment.

In an embodiment, the data collection parameter includes a waveform recording variable data type. The generating a feedback message based on the acquired grid-connection operation data includes: performing package on the acquired grid-connection operation data based on a package mode corresponding to the waveform recording variable data type to generate the feedback message.

In a third aspect, a waveform recording method for a power conversion apparatus is provided according to another embodiment of the present disclosure. The method is applied to a communication unit of the power conversion apparatus; and the power conversion apparatus further includes a power conversion unit and a data processing unit. The method includes: forwarding, in response to receiving a data acquisition message sent from an external commissioning apparatus when the power conversion apparatus is in a grid-connected stage, a data acquisition message to the data processing unit, to enable the data processing unit to acquire grid-connection operation data of the power conversion unit during a grid-connected process based on a data acquisition mode indicated by the data acquisition message, generating a feedback message based on the acquired grid-connection operation data, and sending the feedback message to the communication unit; and receiving the feedback message sent from the data processing unit, and sending the feedback message to the external commissioning apparatus, to enable the external commissioning apparatus to monitor a grid-connected state of the power conversion apparatus based on the feedback message.

In a fourth aspect, a waveform recording system for a power conversion apparatus is provided according to an embodiment of the present disclosure, and the system includes the power conversion apparatus and the external commissioning apparatus as described above.

In the power conversion apparatus, the waveform recording method and the waveform recording system for the power conversion apparatus described above, a communication unit of the power conversion system forwards, in response to receiving a data acquisition message sent from an external commissioning apparatus, the data acquisition message to the data processing unit when the power conversion apparatus is in a grid-connected stage. The data processing unit acquires, in response to receiving the data acquisition message forwarded from the communication unit, grid-connection operation data of the power conversion unit during a grid-connected process based on a data acquisition mode indicated by the data acquisition message, generates a feedback message based on the acquired grid-connection operation data, and sends the feedback message to the communication unit. The communication unit sends, in response to receiving the feedback message sent from the data processing unit, the feedback message to the external commissioning apparatus, to enable the external commissioning apparatus to monitor a grid-connected state of the power conversion apparatus based on the feedback message.

In this method, the external commissioning apparatus communicates with the data processing unit through the communication unit in a message transmission mode. A safety accident caused by a large current passing through the power conversion apparatus flowing through the external commissioning apparatus can be prevented, and safety is improved. The data processing unit may acquire the grid-connection operation data of the power conversion unit based on the data acquisition message sent from the external commissioning apparatus when the power conversion unit is in the grid-connected stage, and generate a feedback message, and send the feedback message to the external commissioning apparatus, to enable the external commissioning apparatus to monitor the grid-connected state of the power conversion apparatus based on the feedback message. Technical personnel can further adjust the power conversion apparatus and analyze the operation condition, thereby improving the development and adjustment efficiency of the power conversion apparatus.

Additional features and advantages of the present disclosure would be described in the following description, and would partially become apparent from the description or through the implementation of the present disclosure. The purposes and other advantages of the present disclosure are realized and obtained through the specification, the claims, and the structure particularly pointed out in the drawings.

In order to make the above-mentioned purposes, features and advantages of the present disclosure more apparent and understandable, preferred embodiments are described below in detail with reference to the accompanying drawings.

### BRIEF DESCRIPTION OF THE DRAWINGS

In order to more clearly illustrate the technical solutions in the specific embodiments of the present disclosure or in the related art, the accompanying drawings used in the description of the specific embodiments or the related art would be briefly introduced in the following. Apparently, the accompanying drawings described in the following illustrate some embodiments of the present disclosure. Other drawings may also be obtained based on these drawings without any creative efforts for those skilled in the art.
FIG. 1 is a schematic diagram of a connection structure of an inverter and a simulator in the related art.
FIG. 2 is a schematic structural diagram of a power conversion apparatus according to an embodiment of the present disclosure;
FIG. 3 is a flowchart of a waveform recording method for a power conversion unit according to an embodiment of the present disclosure;
FIG. 4 is a flowchart of a waveform recording method for a power conversion unit according to another embodiment of the present disclosure;
FIG. 5 is a working flowchart of a waveform recording system for a power conversion unit according to an embodiment of the present disclosure; and
FIG. 6 is a schematic structural diagram of a waveform recording system for a power conversion unit according to an embodiment of the present disclosure.

### DETAILED DESCRIPTION

In order to make the objectives, the technical solutions and the advantages of the embodiments of the present disclosure more clear, technical solutions of the present disclosure are clearly and completely described below in conjunction with the drawings. Apparently, the embodiments described below only some embodiments of the present disclosure, rather than all the embodiments. All other embodiments obtained by those skilled in the art based on the embodiments in the present disclosure without any creative effort fall within the protection scope of the present disclosure.

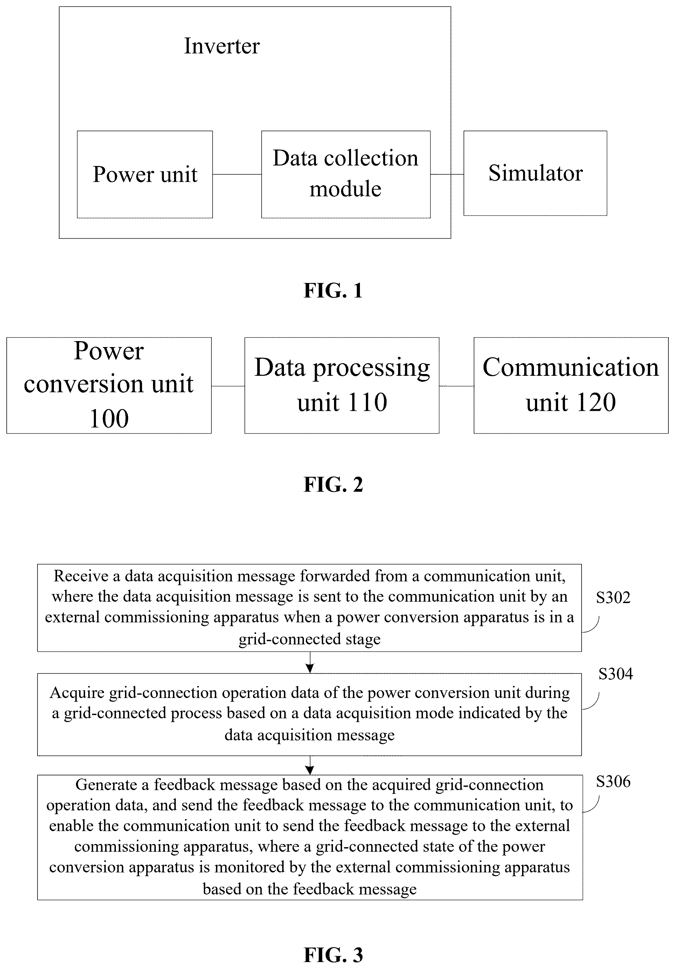

A power conversion unit is a high-voltage frequency converter component that uses a power electronic device for rectification, filtering and inversion, and is generally provided in a power conversion apparatus such as a transformer and an inverter. An inverter is taken as an example. An inverter is used as a power conversion apparatus in the technical field of power electronics. During a development and adjustment process, a simulator is connected to a power unit through a data collection module provided in the inverter, as shown in FIG. 1. A current sensor, a voltage sensor, and the like may be provided in the inverter as the data collection module. After a parameter, such as a current and a voltage of the power unit, and a grid frequency, is collected through the data collection module, a current value of a variable such as the voltage and the current of the power unit provided in the inverter may be viewed through the simulator. In this case, technical personnel need to record a change situation of the variable such as the voltage and the current on their own, and analyze an operation condition of the inverter based on the recorded change situation, which has low efficiency.

After the inverter operates in grid connection, a device, such as the simulator connected to the inverter, needs to be disconnected from the inverter due to safety factors. In this case, a current value of grid-connection operation data of the power unit in the inverter cannot be observed. Technical personnel cannot know an operation condition of the inverter, making it difficult to adjust the inverter.

Based on the above-mentioned issue, a power conversion apparatus, and a waveform recording method and a waveform recording system for a power conversion apparatus are provided according to embodiments of the present disclosure. These technologies may be applied to a renewable energy power generation system having a power conversion apparatus.

To facilitate understanding of an embodiment, a power conversion apparatus disclosed in the embodiment of the present disclosure is first introduced in detail. As shown in FIG. 2, the apparatus includes a power conversion unit 100, a data processing unit 110 and a communication unit 120 connected in sequence. The communication unit 120 is communicatively connected to a preset external commissioning apparatus.

In order to monitor a grid-connected state of the power conversion apparatus in a grid-connected stage, technical personnel may generate a data acquisition message through the external commissioning apparatus and send the message to the above-mentioned communication unit, to enable the communication unit to forward the data acquisition message to the data processing unit.

The above-mentioned external commissioning apparatus refers to a computer that can directly issue a control command, and may be a personal computer, an industrial computer, and the like. The external commissioning apparatus is configured to determine a data acquisition parameter. The data acquisition parameter may be determined based on relevant information inputted into the external commissioning apparatus by technical personnel through a human-computer interaction apparatus. In an embodiment, a preset data acquisition parameter may be provided in the external commissioning apparatus, and the preset data acquisition parameter may be determined as the data acquisition parameter by triggering a certain control on a display interface of the external commissioning apparatus. The data acquisition parameter may indicate grid-connection operation data that needs to be acquired from the power conversion unit, such as an identification parameter of the grid-connection operation data. The data acquisition parameter may further indicate a data collection trigger condition, such as a time parameter, or an identification parameter of certain grid-connection operation data and a threshold value that the identification parameter needs to reach. The data acquisition parameter may further indicate both the grid-connection operation data that needs to be acquired from the power conversion unit and the data collection trigger condition.

The external commissioning apparatus generates a data acquisition message based on the data acquisition parameter, and then the communication unit transmits the data acquisition message to the data processing unit. A specific transmission mode may be transparent transmission. The transparent transmission means that a transmission network is only responsible for transmitting a to-be-transmitted service to a destination node regardless of the type of the transmitted service and ensuring transmission quality without processing the transmitted service.

The communication unit is configured to forward, in response to receiving the data acquisition message sent from the external commissioning apparatus, the data acquisition message to the data processing unit when the power conversion apparatus is in the grid-connected stage. The above-mentioned communication unit may be implemented through devices such as a single-chip microcomputer and an ARM development board. The specific implementation device may be selected based on requirements, and is not limited here.

Since the data processing unit is directly connected to the power conversion unit, a current passing through the power conversion unit is large. When the external commissioning apparatus is directly connected to the data processing unit, the external commissioning apparatus would be burned out due to a fault occurring in a circuit where a power supply is located. After the communication unit is provided, the external commissioning apparatus is not directly connected to the data processing unit and only communicates with the communication unit in a message mode. Therefore, the external commissioning apparatus would not be damaged when a fault occurs in the circuit where the power supply is located.

During the working process of the apparatus, the data processing unit needs to collect the grid-connection operation data of the power conversion unit. The grid-connection operation data may include one or more of a current parameter passing through the power conversion unit, a voltage parameter across the power conversion unit, a grid frequency used by the power supply, active power generated by a power module, and reactive power generated by the power module. The grid-connection operation data may be set based on requirements, and is not limited here. The above-mentioned data processing unit may collect the grid-connection operation data of the power conversion unit in real time when it is in a power-on state, or the data processing unit may start to collect and store a parameter value of corresponding grid-connection operation data when receiving the data acquisition parameter. The data processing unit includes a storage module, and a storage location of the collected grid-connection operation data in the storage module is pre-allocated.

The data processing unit may implemented by one device or a combined application of multiple devices of a digital signal processor (DSP), a field-programmable logic gate array (FPGA), and a single-chip microcomputer. A specific implementation mode may be set based on requirements, and is not limited here.

The data processing unit may generate, in response to receiving the data acquisition message forwarded from the communication unit, a feedback message based on the data acquisition message and the collected grid-connection operation data. The data processing unit may acquire the grid-connection operation data of the power conversion unit during a grid-connected process based on a data acquisition mode indicated by the data acquisition message. The grid-connection operation data during the grid-connected process refers to grid-connection operation data within a specified time period or of a specified quantity. When the data acquisition parameter further indicates a trigger condition, the data processing unit starts to acquire the grid-connection operation data of the power conversion unit during the grid-connected process after determining that the trigger condition is satisfied. After acquiring the grid-connection operation data, the data processing unit needs to generate the feedback message based on the acquired grid-connection operation data, and send the feedback message to the communication unit.

The communication unit sends, in response to receiving the feedback message sent from the data processing unit, the feedback message to the external commissioning apparatus, to enable the external commissioning apparatus to monitor a grid-connected state of the power conversion apparatus based on the feedback message. In an embodiment, the external commissioning apparatus may generate a corresponding waveform image based on the grid-connection operation data within the specified time period or of the specified quantity in the feedback message, or the external commissioning apparatus may process the grid-connection operation data within the specified time period or of the specified quantity in the feedback message based on a preset processing algorithm. In an embodiment, the above-mentioned external commissioning apparatus may parse the feedback message to obtain the grid-connection operation data acquired by the data processing unit. The grid-connection operation data is the data collected by the data processing unit within the specified time period, or the data of the specified quantity collected by the data processing unit. Then, a corresponding waveform image is generated based on the grid-connection operation data, and the waveform image is displayed on a graphical user interface, to facilitate technical personnel to analyze an operation state of the power conversion unit.

In the above-mentioned power conversion apparatus, the communication unit forwards, in response to receiving the data acquisition message sent from the external commissioning apparatus, the data acquisition message to the data processing unit when the power conversion apparatus is in the grid-connected stage. The data processing unit acquires, in response to receiving the data acquisition message forwarded from the communication unit, the grid-connection operation data of the power conversion unit during the grid-connected process based on the data acquisition mode indicated by the data acquisition message, generates the feedback message based on the acquired grid-connection operation data, and sends the feedback message to the communication unit. The communication unit sends, in response to receiving the feedback message sent from the data processing unit, the feedback message to the external commissioning apparatus, to enable the external commissioning apparatus to monitor the grid-connected state of the power conversion apparatus based on the feedback message.

In this method, the external commissioning apparatus communicates with the data processing unit through the communication unit in a message transmission mode. A safety accident caused by a large current passing through the power conversion apparatus flowing through the external commissioning apparatus can be prevented, and safety is improved. The data processing unit may acquire the grid-connection operation data of the power conversion unit based on the data acquisition message sent from the external commissioning apparatus when the power conversion unit is in the grid-connected stage, and generate a feedback message, and send the feedback message to the external commissioning apparatus, to enable the external commissioning apparatus to monitor the grid-connected state of the power conversion apparatus based on the feedback message. Technical personnel can further adjust the power conversion apparatus and analyze the operation condition, thereby improving the development and adjustment efficiency of the power conversion apparatus.

In an embodiment, the data acquisition parameter includes a waveform recording variable address. The waveform recording variable address is a variable address in the data processing unit for storing the grid-connection operation data. The waveform recording variable address may be allocated by the external commissioning apparatus for the data processing unit, or may be preset by the data processing unit. When the grid-connection operation data collected by the data processing unit is of one type, the grid-connection operation data is the grid-connection operation data to be collected. The external commissioning apparatus needs to acquire the variable address in the data processing unit for storing the collected grid-connection operation data, and the variable address for storing the collected grid-connection operation data is determined as the waveform recording variable address. The data acquisition message generated by the external commissioning apparatus stores information of the waveform recording variable address.

The above-mentioned data processing unit may parse, in response to receiving the data acquisition message, the data acquisition message to determine the data acquisition parameter, acquires the grid-connection operation data of the power conversion unit during the grid-connected process based on the data acquisition mode indicated by the data acquisition parameter. Since the data acquisition parameter include the waveform recording variable address, the data processing unit may store the grid-connection operation data collected into the waveform recording variable address from a current moment, stop storing after a set time period expires or in response to the quantity of the collected grid-connection operation data reaches the specified quantity, and determine the stored grid-connection operation data as the data acquisition parameter.

When the data acquisition parameter needs to indicate the grid-connection operation data and the data collection trigger condition, the data acquisition parameter may be divided into two parts: a trigger parameter and a second data acquisition parameter. The second data acquisition parameter is used to indicate the grid-connection operation data to be collected of the power conversion unit, and the trigger parameter is used to indicate the data collection trigger condition. The grid-connection operation data may be of multiple types, such as the current parameter and the voltage parameter described above.

To illustrate a case that the data acquisition parameter needs to indicate the grid-connection operation data and the data collection trigger condition as an example, it is assumed that the grid-connection operation data includes two different types of grid-connection operation data, one type of the grid-connection operation data may be used as the trigger parameter, and the other type of the grid-connection operation data may be used as the grid-connection operation data to be acquired. When a mode in which the data collection trigger condition includes that the trigger parameter satisfies the trigger condition is adopted, the external commissioning apparatus needs to determine, based on second grid-connection operation data and the trigger condition, the second data acquisition parameter after determining the trigger parameter. In an embodiment, the above-mentioned trigger parameter may be of one type or multiple types, and the above-mentioned second grid-connection operation data may also be of one type or multiple types. For example, the trigger parameter may be a voltage parameter and a current parameter, and a to-be-satisfied trigger condition may be the voltage parameter being greater than 200 V, and the current parameter being greater than 500 mA.

The above-mentioned second data acquisition parameter includes a waveform recording variable address. The external commissioning apparatus needs to acquire the variable address in the data processing unit for storing the collected second grid-connection operation data, and determine the variable address storing the second grid-connection operation data as the waveform recording variable address.

The above-mentioned trigger parameter includes a trigger source address. The external commissioning apparatus needs to acquire the variable address in the data processing unit for storing the collected trigger parameter, and determine the variable address storing the trigger parameter as the trigger source address.

The above-mentioned trigger condition may include the trigger parameter reaching a preset trigger threshold, or the trigger parameter being greater than (or equal to) a trigger value parameter, or the trigger parameter being less than (or equal to) the trigger value parameter, and the like. The above-mentioned trigger condition may be set based on requirements, and is not limited here. The trigger threshold that the trigger parameter needs to reach may be pre-stored in the data processing unit. For example, when the trigger parameter is a voltage parameter, the data processing unit may automatically determine the trigger threshold as 200 V. When the trigger threshold needs to be set through the external commissioning apparatus, the trigger parameter further includes a trigger value parameter. The external commissioning apparatus is further configured to determine a trigger threshold inputted by technical personnel or a preset trigger threshold as the trigger value parameter.

When the data acquisition parameter includes the trigger source address, the trigger value parameter, and the waveform recording variable address, the data processing unit needs to read the trigger parameter from the storage address indicated by the trigger source address before performing the reading a specified number of grid-connection operation data from the storage address indicated by the waveform recording variable address, determine whether a trigger condition is satisfied based on the trigger parameter and the trigger value parameter, and perform, in response to the trigger condition being satisfied, the reading a specified number of grid-connection operation data from the storage address indicated by the waveform recording variable address.

In an embodiment, the trigger parameter may be of one type or multiple types. The trigger parameter including a first trigger parameter and a second trigger parameter is taken as an example for description. Correspondingly, the trigger value parameter includes a first trigger value parameter corresponding to the first trigger parameter, and a second trigger value parameter corresponding to the second trigger parameter. After reading the first trigger parameter, the data processing unit needs to determine whether a numerical comparison relationship between the first trigger parameter and the first trigger value parameter satisfies a first trigger condition to obtain a first determination result. The above-mentioned first trigger condition may be the first trigger parameter being greater than or equal to the first trigger value parameter, or the first trigger parameter being less than the first trigger value parameter. After reading the second trigger parameter, the data processing unit needs to determine whether a numerical comparison relationship between the second trigger parameter and the second trigger value parameter satisfies a second trigger condition to obtain a second determination result. The second trigger condition may be the second trigger parameter being greater than or equal to the second trigger value parameter, or the second trigger parameter being less than the second trigger value parameter. The data processing unit then determines, based on the first determination result and the second determination result, whether to perform the reading a specified number of grid-connection operation data from the storage address indicated by the waveform recording variable address.

The order of determining the first determination result and determining the second determination result described above may be set based on requirements, and the process of determining the first determination result and determining the second determination result is performed according to a set frequency. After determining the first determination result and the second determination result, the above-mentioned data processing unit may further perform, in response to the first determination result of the first trigger condition being satisfied and the second determination result of the second trigger condition being satisfied, the reading a specified number of grid-connection operation data from the storage address indicated by the waveform recording variable address. In the above-mentioned situation, the process of collecting the grid-connection operation data can only be triggered when both the first trigger condition and the second trigger condition are satisfied.

The above-mentioned data processing unit may also perform, in response to the first determination result of the first trigger condition being satisfied or the second determination result of the second trigger condition being satisfied, the reading a specified number of grid-connection operation data from the storage address indicated by the waveform recording variable address. In the above-mentioned situation, the process of collecting the grid-connection operation data can be triggered as long as either the first trigger condition or the second trigger condition needs is satisfied.

In an embodiment, the trigger condition may be that a numerical relationship between the first trigger parameter and the second trigger parameter is a specified numerical relationship, such as the first trigger parameter being twice the second trigger parameter. The trigger condition may be set based on requirements, and is not limited here.

When the trigger condition is the trigger parameter reaching the trigger threshold, the trigger parameter may actually reach the trigger threshold in different numerical change modes, such as changing from small to large to reach the trigger threshold, or changing from large to small to reach the trigger threshold. When the trigger condition limits the trigger parameter to reach the preset trigger threshold in a preset numerical change mode, the above-mentioned trigger parameter further includes a trigger type parameter. The external commissioning apparatus is further configured to determine the trigger type parameter based on the numerical change mode.

In an embodiment, the above-mentioned numerical change mode includes changing from small to large, or changing from large to small, or both changing from small to large and changing from large to small. The external commissioning apparatus determines the trigger type parameter as rising edge triggering in response to the numerical change mode being changing from small to large, determines the trigger type parameter as falling edge triggering in response to the numerical change mode being changing from large to small, and determines the trigger type parameter as rising edge triggering and falling edge triggering in response to the numerical change mode being changing from small to large and changing from large to small.

Correspondingly, the data processing unit needs to read the trigger parameter from the trigger source address, and determine whether the trigger parameter reaches the trigger value parameter in a numerical change mode corresponding to the trigger type parameter. In an embodiment, when the trigger type is rising edge, the trigger is successful in response to a variable value corresponding to the trigger source address reaching a trigger value from small to large, and the trigger is unsuccessful in response to the variable value corresponding to the trigger source address reaching the trigger value from large to small. When the trigger type is falling edge, the trigger is successful in response to the variable value corresponding to the trigger source address reaching the trigger value from large to small, and the trigger is unsuccessful in response to the variable value corresponding to the trigger source address reaching the trigger value from small to large. When the trigger type is rising edge or falling edge, the trigger is successful in response to the variable value corresponding to the trigger source address reaching the trigger value from large to small or reaching the trigger value from small to large, and the trigger is unsuccessful otherwise in response to the variable value corresponding to the trigger source address reaching the trigger value from small to large or reaching the trigger value from large to small.

Since different processing modes correspond to different types of data during the process of message transmission, the data acquisition parameter further includes a waveform recording variable data type parameter. The external commissioning apparatus may determine the data type of the grid-connection operation data collected in the waveform recording variable address as the waveform recording variable data type parameter. Correspondingly, the data processing unit needs to perform package on the grid-connection operation data based on a package mode corresponding to the waveform recording variable data type to generate the feedback message.

When the data collection trigger condition may be determined from the data acquisition parameter, the process of the data processing unit storing the grid-connection operation data may be performed in the following two methods.
(1) The above-mentioned data processing unit acquires a specified number of grid-connection operation data stored in the waveform recording variable address starting from a current moment. That is, in response to the data collection trigger condition (also referred to as a "data latching condition") being satisfied, an array defined by the data processing unit starts to latch a value of the grid-connection operation data (also referred to as a "waveform recording variable").
(2) The above-mentioned data processing unit acquires 1/2 of the specified number of grid-connection operation data stored in the waveform recording variable address before the current moment, and 1/2 of the specified number of grid-connection operation data stored in the waveform recording variable address starting from the current moment. That is, from a moment when the data collection trigger condition is satisfied, half of data values of the array defined in the data processing unit are retained, and real-time values of a waveform recording variable having a length being half of a length of the array are restored. That is, data values of the waveform recording variable before and after the triggering are obtained.

Corresponding to the above-mentioned embodiment of the power conversion apparatus, a waveform recording method for a power conversion apparatus is further provided according to an embodiment of the present disclosure. The method is applied to the data processing unit of the above-mentioned power conversion apparatus. The above-mentioned power conversion apparatus further includes a power conversion unit and a communication unit. As shown in FIG. 3, the method includes the following steps S302, S304 and S306.

In step S302, a data acquisition message forwarded from the communication unit is received, where the data acquisition message is sent to the communication unit by an external commissioning apparatus when the power conversion apparatus is in a grid-connected stage.

In step S304, grid-connection operation data of the power conversion unit during a grid-connected process is acquired based on a data acquisition mode indicated by the data acquisition message.

The data processing unit needs to parse the data acquisition message to acquire the data acquisition parameter, and further determine the data acquisition mode based on the data acquisition parameter. For example, the data acquisition mode refers to which grid-connection operation data is acquired, and under what condition the data acquisition is performed.

In an embodiment, the data acquisition parameter includes a waveform recording variable address. The waveform recording variable address indicates a storage address of a grid-connected operation parameter to be acquired. The data processing unit may read a specified number of grid-connection operation data from the storage address indicated by the waveform recording variable address.

The data acquisition parameter may also include a trigger source address, a trigger value parameter and a waveform recording variable address. The trigger source address indicates a storage address of a trigger parameter. The data processing unit needs to read the trigger parameter from the storage address indicated by the trigger source address before performing the reading a specified number of grid-connection operation data from the storage address indicated by the waveform recording variable address, determine whether a trigger condition is satisfied based on the trigger parameter and the trigger value parameter, and perform, in response to the trigger condition being satisfied, the reading a specified number of grid-connection operation data from the storage address indicated by the waveform recording variable address.

When the data acquisition parameter further includes a trigger type parameter, where the trigger type parameter is used to indicate a numerical change mode of the trigger parameter reaching the trigger value parameter, the data processing unit further needs to determine whether the trigger parameter reaches the trigger value parameter in a numerical change mode corresponding to the trigger type parameter, such as changing from large to small to reach the trigger value parameter.

The following two methods may be adopted for reading a specified number of grid-connection operation data from the storage address indicated by the waveform recording variable address.
(1) The specified number of grid-connection operation data stored in the waveform recording variable address starting from a current moment is acquired directly. This method is applicable to a case that only the grid-connection operation data after the current moment is concerned.
(2) 1/2 of the specified number of grid-connection operation data stored in the waveform recording variable address before the current moment, and 1/2 of the specified number of grid-connection operation data stored in the waveform recording variable address starting from the current moment are acquired. This method is applicable to a case that the grid-connection operation data before and after the current moment are concerned.

In step S306, a feedback message is generated based on the acquired grid-connection operation data, and the feedback message is sent to the communication unit, to enable the communication unit to send the feedback message to the external commissioning apparatus, where a grid-connected state of the power conversion apparatus is monitored by the external commissioning apparatus based on the feedback message.

Different processing modes are usually adopted for generating a message based on data of different data types. The data acquisition parameter further includes a waveform recording variable data type. The data processing unit needs to perform package on the acquired grid-connection operation data based on a package mode corresponding to the waveform recording variable data type to generate the feedback message.

In the above-mentioned method, the data processing unit of the power conversion apparatus receives a data acquisition message forwarded from the communication unit, where the data acquisition message is sent to the communication unit by an external commissioning apparatus when the power conversion apparatus is in a grid-connected stage; acquires grid-connection operation data of the power conversion unit during a grid-connected process based on a data acquisition mode indicated by the data acquisition message; and generates a feedback message based on the acquired grid-connection operation data, and sends the feedback message to the communication unit, to enable the communication unit to send the feedback message to the external commissioning apparatus, where a grid-connected state of the power conversion apparatus is monitored by the external commissioning apparatus based on the feedback message.

In this method, the data processing unit may acquire the grid-connection operation data of the power conversion unit based on the data acquisition message sent from the external commissioning apparatus when the power conversion unit is in the grid-connected stage, and generate a feedback message, and send the feedback message to the external commissioning apparatus, to enable the external commissioning apparatus to monitor the grid-connected state of the power conversion apparatus based on the feedback message. Technical personnel can further adjust the power conversion apparatus and analyze the operation condition, thereby improving the development and adjustment efficiency of the power conversion apparatus.

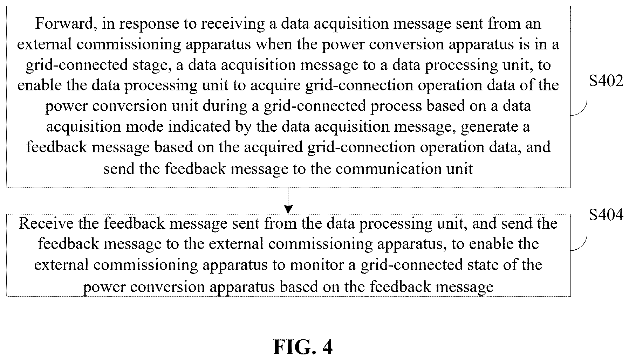

A waveform recording method for the power conversion apparatus is further provided according to another embodiment of the present disclosure, and the method is applied to the communication unit of the above-mentioned power conversion apparatus. The power conversion apparatus further includes a power conversion unit and a data processing unit. As shown in FIG. 4, the method includes the following steps S402 and S404.

In step S402, in response to receiving a data acquisition message sent from an external commissioning apparatus when the power conversion apparatus is in a grid-connected stage, a data acquisition message is forwarded to the data processing unit, to enable the data processing unit to acquire grid-connection operation data of the power conversion unit during a grid-connected process based on a data acquisition mode indicated by the data acquisition message, a feedback message is generated based on the acquired grid-connection operation data, and the feedback message is sent to the communication unit.

In step S404, the feedback message sent from the data processing unit is received, and the feedback message is sent to the external commissioning apparatus, to enable the external commissioning apparatus to monitor a grid-connected state of the power conversion apparatus based on the feedback message.

During the above-mentioned process, the communication unit only has a function of message forwarding, and does not perform other processing.

In the above-mentioned method, the power conversion apparatus forwards, in response to receiving a data acquisition message sent from an external commissioning apparatus when the power conversion apparatus is in a grid-connected stage, a data acquisition message to the data processing unit, to enable the data processing unit to acquire grid-connection operation data of the power conversion unit during a grid-connected process based on a data acquisition mode indicated by the data acquisition message, generates a feedback message based on the acquired grid-connection operation data, and sends the feedback message to the communication unit; and receives the feedback message sent from the data processing unit, and sends the feedback message to the external commissioning apparatus, to enable the external commissioning apparatus to monitor a grid-connected state of the power conversion apparatus based on the feedback message.

In this method, the external commissioning apparatus communicates with the data processing unit through the communication unit in a message transmission mode. A safety accident caused by a large current passing through the power conversion apparatus flowing through the external commissioning apparatus can be prevented, and safety is improved. In addition, the data processing unit may acquire, in response to receiving the data acquisition message, the grid-connection operation data of the power conversion unit, and generate a feedback message, and send the feedback message to the external commissioning apparatus, to enable the external commissioning apparatus to monitor the grid-connected state of the power conversion apparatus based on the feedback message. Technical personnel can further adjust the power conversion apparatus and analyze the operation condition, thereby improving the development and adjustment efficiency of the power conversion apparatus.

A waveform recording system for a power conversion unit is further provided according to another embodiment of the present disclosure. In the system, a DSP control board module is taken as a data processing unit, and an ARM control board module (also referred to as an "ARM development board") is taken as a communication unit.

The external commissioning apparatus (also referred to as an "external commissioning apparatus module") is configured to set and issue a trigger mode. The trigger mode is mainly set based on parameters such as a waveform recording variable address, a waveform recording variable data type, a trigger source address, a trigger source data type, a trigger value, and a trigger type. Meanwhile, the external commissioning apparatus also receives and parses grid-connection operation data (also referred to as "latched data") from the DSP control board module, and draws and displays a waveform of the waveform recording variable on an interface of the external commissioning apparatus based on the grid-connection operation data. The ARM control board module is only configured to transparently transmit round-trip messages between the external commissioning apparatus and the DSP control board module. The DSP control board module parses the message from the external commissioning apparatus, latches the data based on the trigger mode specified by the external commissioning apparatus, performs package on the latched data to generate a message, and transfers the generated message to the external commissioning apparatus.

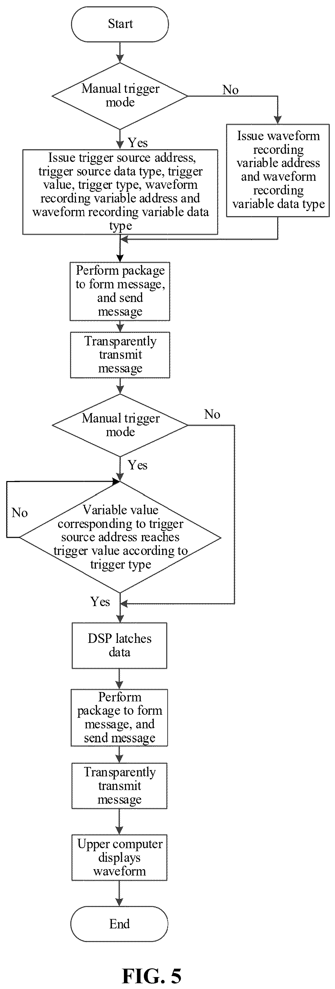

As shown in FIG. 5, when adjustment and waveform recording need to be performed on an inverter operating in grid connection, the following method may be implemented through the above-mentioned system.
1. A corresponding variable is set in the external commissioning apparatus based on the trigger mode. In response to an automatic trigger mode being set, only two data acquisition parameters, namely a waveform recording variable address and a waveform recording variable data type, are set in the external commissioning apparatus. In response to a manual trigger mode being set, multiple data acquisition parameters need to be set, which includes: a trigger source address, a trigger source data type, a trigger value, a trigger type, a waveform recording variable address, and a waveform recording variable data type. The automatic trigger may be regarded as the triggering being completed when the waveform recording variable address and the waveform recording variable data type are issued. The manual trigger may be regarded as the triggering being completed when a variable value corresponding to the trigger source address reaches the trigger value according to the trigger type.
   In an embodiment, the above-mentioned waveform recording variable address is a memory address of the grid-connection operation data (also referred to as "variable") to be recorded in a DSP program, such as 0x0008853. The above-mentioned waveform recording variable data type is the data type of the variable to be recorded in the DSP program, which mainly includes integer (int), short integer (short), long integer (long), single-precision floating-point (float), double-precision floating-point (double), and the like. The above-mentioned trigger source address is the memory address of a variable used for determining the trigger condition in the DSP program, such as 0x0008851. The above-mentioned trigger source data type is the data type of a variable used for triggering in the DSP program, which mainly includes integer (int), short integer (short), long integer (long), single-precision floating-point (float), and double-precision floating-point (double). The above-mentioned trigger types mainly include rising edge triggering, falling edge triggering, and rising or falling edge triggering.
2. The external commissioning apparatus performs package based on a result set in above step 1, and sends a message. The message is transparently transmitted to the DSP control board module through the ARM control board module.
3. The DSP control board module receives the message transparently transmitted through the ARM control board module, and parses the message. In response to the trigger mode being the automatic trigger mode, the DSP control board module directly starts to latch the data, that is, stores grid-connection operation data collected in the waveform recording variable address. In response to the trigger mode being the manual trigger mode, whether the grid-connection operation data corresponding to the trigger source address reaches the trigger value according to the trigger type needs to be determined. In response to the trigger value being reached, the trigger is successful, and the DSP control board module starts to latch the data. In response to the trigger value is not reached, the DSP control board module continues to wait.
   When latching the grid-connection operation data, the following two methods may be adopted. In a first method, from a moment when a data latching condition is satisfied, an array defined by the DSP control board module starts to store real-time values of the waveform recording variable, to obtain data values of the waveform recording variable after the triggering. In a second method, from the moment when the data latching condition is satisfied, half of the data values in the array defined in the DSP control board module are retained, and real-time values of a waveform recording variable having a length being half of a length of the array are restored. That is, data values of the waveform recording variable before and after the triggering are obtained.
4. The DSP control board module performs package on the latched data mentioned in step 3, and sends a message. The message needs to be transparently transmitted to the external commissioning apparatus through the ARM control board module. The external commissioning apparatus parses the message to obtain the latched data, and performs dot plotting and line connection on the latched data on the interface of the external commissioning apparatus to display a waveform diagram of the waveform recording variable, to realize a waveform recording function.

The above-mentioned system may solve a problem that a waveform of a program variable of the inverter cannot be viewed during the development and adjustment process when the inverter is operating in grid connection. Through the above-mentioned system, two waveform recording trigger modes, namely the manual trigger mode and the automatic trigger mode, can be realized. The automatic trigger mode enables convenient and rapid observation of the waveform of the waveform recording variable, and the manual trigger mode facilitates observation of a correlation between the waveform recording variable and a trigger source. The waveform recording trigger modes effectively improve the development and adjustment efficiency of the inverter.

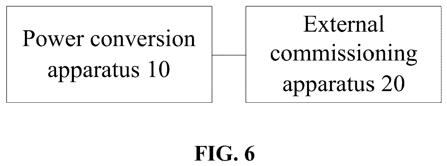

Corresponding to the above-mentioned embodiment of the waveform recording system for the power conversion unit, a waveform recording system for a power conversion apparatus is further provided according to the embodiment. As shown in FIG. 6, the system includes the above-mentioned power conversion apparatus 10 and an external commissioning apparatus 20.

The above-mentioned waveform recording system for the power conversion unit has same technical effects as the above-mentioned power conversion apparatus. The external commissioning apparatus communicates with the data processing unit through the communication unit in a message transmission mode. A safety accident caused by a large current passing through the power conversion apparatus flowing through the external commissioning apparatus can be prevented, and safety is improved. The data processing unit may acquire the grid-connection operation data of the power conversion unit based on the data acquisition message sent from the external commissioning apparatus when the power conversion unit is in the grid-connected stage, and generate a feedback message, and send the feedback message to the external commissioning apparatus, to enable the external commissioning apparatus to monitor the grid-connected state of the power conversion apparatus based on the feedback message. Technical personnel can further adjust the power conversion apparatus and analyze the operation condition, thereby improving the development and adjustment efficiency of the power conversion apparatus.

The waveform recording system for the power conversion unit according to the embodiment of the present disclosure has same technical features as the power conversion apparatus and the waveform recording method for the power conversion apparatus according to the above-mentioned embodiments, and the waveform recording system can solve same technical problems and achieve same technical effects.

Those skilled in the art can clearly understand that for the convenience and simplicity of description, the specific working process of the waveform recording system for the power conversion unit described above can be referred to the corresponding process in the foregoing method embodiments, and would not be described again here.

In addition, in the description of the embodiments of the present disclosure, unless otherwise clearly defined and limited, the terms "install", "connect" and "link" should be understood in a broad sense. For example, a connection may be a fixed connection, or a detachable connection, or an integral connection. A connection may be a mechanical connection or an electrical connection. A connection may be a direct connection, or an indirect connection through an intermediate medium, or an internal connection between two elements. For those skilled in the art, specific meanings of the terms in the present disclosure may be understood on a case-by-case basis.

In a case that the function is implemented in a form of a software functional unit and sold or used as an independent product, the function may be stored in a computer readable storage medium. Based on such understanding, part of the technical solutions the present disclosure which are essential or contribute to the related art, or part of the technical solutions may be embodied in a form of a software product. The computer software product is stored in a storage medium and includes several instructions for causing a computer device (such as a personal computer, a server, or a network device) to perform all or part of steps of the method described in the embodiments of the present disclosure. The foregoing storage medium includes various media capable of storing program codes, such as a U disk, a removable hard disk, a read-only memory (ROM), a random-access memory (RAM), a magnetic disk and an optical disk.

In the description of the present disclosure, it should be noted that the orientations or positional relationships indicated by the terms such as "central", "upper", "lower", "left", "right", "vertical", "horizontal", "inner", and "outer", are based on the orientations or positional relationships shown in the accompanying drawings, which are only used to facilitate the description of the present disclosure and to simplify the description, and are not intended to indicate or imply that the devices or elements referred to must have a particular orientation or can only be configured and operated in a particular orientation. Therefore the above-mentioned terms should not be construed as a limitation to the present disclosure. In addition, terms such as "first", "second" and "third" are merely for description, and should not be understood as indicating or implying relative importance.

Finally, it should be noted that the above embodiments are only specific embodiments of the present disclosure, and are used to illustrate the technical solutions of the present disclosure, rather than to limit the present disclosure. The protection scope of the present disclosure is not limited thereto. Although the present disclosure is described in detail with reference to the foregoing embodiments, those skilled in the art should understand that those familiar with the technical field can make modifications or easily envisage changes to the technical solutions recorded in the foregoing embodiments within the technical scope disclosed in the present disclosure, or can obtain equivalent substitutions of some of the technical features. Such modifications, changes or substitutions do not deviate from the essence of the corresponding technical solutions from the spirit and scope of the technical solutions in the embodiments of the present disclosure, and shall be covered by the protection scope of the present disclosure. Therefore, the protection scope of the present disclosure shall be in accordance with the protection scope of the claims.

## Claims

1. A power conversion apparatus, **characterized by** comprising a power conversion unit, a data processing unit and a communication unit, wherein
the communication unit is configured to forward, in response to receiving a data acquisition message sent from an external commissioning apparatus, the data acquisition message to the data processing unit when the power conversion apparatus is in a grid-connected stage;
the data processing unit is configured to acquire, in response to receiving the data acquisition message forwarded from the communication unit, grid-connection operation data of the power conversion unit during a grid-connected process based on a data acquisition mode indicated by the data acquisition message, and the data processing unit is configured to generate a feedback message based on the acquired grid-connection operation data, and send the feedback message to the communication unit; and
the communication unit is further configured to send, in response to receiving the feedback message sent from the data processing unit, the feedback message to the external commissioning apparatus, to enable the external commissioning apparatus to monitor a grid-connected state of the power conversion apparatus based on the feedback message.

2. The power conversion apparatus according to claim 1, wherein the data processing unit is further configured to parse the data acquisition message to determine a data acquisition parameter, wherein the data acquisition parameter is used to indicate the data acquisition mode, and the data processing unit is further configured to acquire the grid-connection operation data of the power conversion unit during the grid-connected process based on the data acquisition mode indicated by the data acquisition parameter.

3. The power conversion apparatus according to claim 2, wherein the data acquisition parameter comprises a waveform recording variable address, wherein the waveform recording variable address indicates a storage address of a grid-connected operation parameter to be acquired; and
the data processing unit is further configured to read a specified number of grid-connection operation data from the storage address indicated by the waveform recording variable address.

4. The power conversion apparatus according to claim 3, wherein the data acquisition parameter further comprises: a trigger source address and a trigger value parameter, wherein the trigger source address indicates a storage address of a trigger parameter; and
the data processing unit is further configured to read the trigger parameter from the storage address indicated by the trigger source address before performing the reading a specified number of grid-connection operation data from the storage address indicated by the waveform recording variable address, the data processing unit is further configured to determine whether a trigger condition is satisfied based on the trigger parameter and the trigger value parameter, and the data processing unit is further configured to perform, in response to the trigger condition being satisfied, the reading a specified number of grid-connection operation data from the storage address indicated by the waveform recording variable address.

5. The power conversion apparatus according to claim 4, wherein the trigger condition comprises: the trigger parameter being greater than or equal to the trigger value parameter, or the trigger parameter being less than the trigger value parameter.

6. The power conversion apparatus according to claim 4, wherein the trigger parameter comprises a first trigger parameter and a second trigger parameter, and the trigger value parameter comprises a first trigger value parameter corresponding to the first trigger parameter and a second trigger value parameter corresponding to the second trigger parameter; and
the data processing unit is further configured to determine whether a numerical comparison relationship between the first trigger parameter and the first trigger value parameter satisfies a first trigger condition to obtain a first determination result, the data processing unit is further configured to determine whether a numerical comparison relationship between the second trigger parameter and the second trigger value parameter satisfies a second trigger condition to obtain a second determination result, and the data processing unit is further configured to determine, based on the first determination result and the second determination result, whether to perform the reading a specified number of grid-connection operation data from the storage address indicated by the waveform recording variable address.

7. The power conversion apparatus according to claim 6, wherein the first trigger condition comprises: the first trigger parameter being greater than or equal to the first trigger value parameter, or the first trigger parameter being less than the first trigger value parameter; and
the second trigger condition comprises: the second trigger parameter being greater than or equal to the second trigger value parameter, or the second trigger parameter being less than the second trigger value parameter.

8. The power conversion apparatus according to claim 6, wherein the data processing unit is further configured to perform, in response to the first determination result of the first trigger condition being satisfied and the second determination result of the second trigger condition being satisfied, the reading a specified number of grid-connection operation data from the storage address indicated by the waveform recording variable address, or the data processing unit is further configured to perform, in response to the first determination result of the first trigger condition being satisfied or the second determination result of the second trigger condition being satisfied, the reading a specified number of grid-connection operation data from the storage address indicated by the waveform recording variable address.

9. The power conversion apparatus according to claim 4, wherein the data acquisition parameter further comprises a trigger type parameter, wherein the trigger type parameter is used to indicate a numerical change mode of the trigger parameter reaching the trigger value parameter; and
the data processing unit is further configured to determine whether the trigger parameter reaches the trigger value parameter in a numerical change mode corresponding to the trigger type parameter.

10. The power conversion apparatus according to claim 9, wherein the numerical change mode comprises changing from small to large, or changing from large to small, or both changing from small to large and changing from large to small;
the trigger type parameter corresponding to the numerical change mode of changing from small to large is rising edge triggering;
the trigger type parameter corresponding to the numerical change mode of changing from large to small is falling edge triggering; and
the trigger type parameter corresponding to the numerical change mode of changing from small to large and changing from large to small is rising edge triggering and falling edge triggering.

11. The power conversion apparatus according to claim 2, wherein the data acquisition parameter comprise a waveform recording variable data type; and
the data processing unit is further configured to perform package on the acquired grid-connection operation data based on a package mode corresponding to the waveform recording variable data type to generate the feedback message.

12. A waveform recording method for a power conversion apparatus, **characterized in that**, the method is applied to a data processing unit of the power conversion apparatus, wherein the power conversion apparatus further comprises a power conversion unit and a communication unit, wherein the method comprises:
receiving a data acquisition message forwarded from the communication unit, wherein the data acquisition message is sent to the communication unit by an external commissioning apparatus when the power conversion apparatus is in a grid-connected stage;
acquiring grid-connection operation data of the power conversion unit during a grid-connected process based on a data acquisition mode indicated by the data acquisition message; and
generating a feedback message based on the acquired grid-connection operation data, and sending the feedback message to the communication unit, to enable the communication unit to send the feedback message to the external commissioning apparatus, wherein a grid-connected state of the power conversion apparatus is monitored by the external commissioning apparatus based on the feedback message.

13. A waveform recording method for a power conversion apparatus, **characterized in that**, the method is applied to a communication unit of the power conversion apparatus, wherein the power conversion apparatus further comprises a power conversion unit and a data processing unit, wherein the method comprises:
forwarding, in response to receiving a data acquisition message sent from an external commissioning apparatus when the power conversion apparatus is in a grid-connected stage, a data acquisition message to the data processing unit, to enable the data processing unit to acquire grid-connection operation data of the power conversion unit during a grid-connected process based on a data acquisition mode indicated by the data acquisition message, generating a feedback message based on the acquired grid-connection operation data, and sending the feedback message to the communication unit; and
receiving the feedback message sent from the data processing unit, and sending the feedback message to the external commissioning apparatus, to enable the external commissioning apparatus to monitor a grid-connected state of the power conversion apparatus based on the feedback message.

14. A waveform recording system for a power conversion apparatus, **characterized in that**, the waveform recording system comprises the power conversion apparatus and the external commissioning apparatus according to any one of claims 1 to 11.
